# EUROPEAN PATENT SPECIFICATION

(11) **EP 1 883 179 B1**
(45) Date of publication and mention of the grant of the patent: **28.03.2012**
(21) Application number: 07112647.8
(22) Date of filing: 17.07.2007
(51) Int. Cl.: H04L 12/10, H02H 9/00

(54) **Communication system for hazardous environments**
Kommunikationssystem für gefährliche Umgebungen
Système de communication dans un milieu hostile

(30) Priority: 27.07.2006 GB 0614936
(43) Date of publication of application: 30.01.2008
(73) Proprietor: Controlled Systems Ltd, Cadley Hill Swadlincote Derbyshire DE11 9EU (GB)
(72) Inventor: Cooper, Ian, Swadlincote, Derbyshire DE117QH (GB)
(74) Representative: Gill, David Alan

(56) References cited:
- US-A- 4 004 104
- US-A1- 2005 243 483
- US-B1- 6 473 608

## Description

The present invention relates to a communication system and particularly to a communication system for hazardous environments.

Ethernet is a well known example of a communication system for use in office environments for networking Information Technology (IT) systems involving personal computers (PCs) and peripherals. It is now being widely introduced into factories and other industrial locations as the need for interchange of process data and information increases along with the introduction of more complex items of machinery and plant. In industries operating in non-hazardous conditions, essentially the same techniques and equipment can be used as in office environments, although such equipment is often "toughened" for industrial use, thereby allowing it to operate reliably in extremes of environmental conditions. Thus the operational temperature range is typically extended from a 0 to 40°C range of operation (as in an office environment) to a -40 to +70°C range of operation in industry. An industrial Ethernet system also has improved protection against shock, vibration, electrostatic discharges (ESD) and immunity to transients and surges which are more likely to be found in industrial than office environments.

Areas are considered hazardous where there is an atmosphere containing flammable or combustible materials (e.g. fuels, flammable gases, explosive vapours, combustible dusts, etc), and where the atmosphere has the potential to ignite. To extend an Ethernet system into such hazardous areas, it has to be rendered non-incendive or Intrinsically Safe to the relevant standards (which will be known to the person skilled in the art). This means that the Ethernet system must not produce a spark that has sufficient energy or heat to cause an ignition of gases or dusts both during normal operation and when in a fault condition. However, there are problems in rendering an Ethernet system non-incendive or Intrinsically Safe because there is a conflict between the performance requirements of the Ethernet system and the energy-limitation required to render it non-incendive or Intrinsically Safe.

So far, Ethernet systems have found limited applications in the least onerous hazardous areas, known as Zone 2 or Division 2 in the standardised classification adopted by the relevant regulatory bodies. Normal industrial Ethernet devices can be used in Zone 2 environments provided they are safe (i.e. non-incendive) in normal operation. No special techniques are necessary to render these devices non-incendive, but they need to be examined and may be certified by a notified body as suitable for such use. A limitation of these known devices for Zone 2 environments is that it is not permitted to disconnect the Ethernet system connections when a gas is potentially present: a practice known as "live-working". In order for live-working to be permitted in a Zone 2 environment, or for any use in more onerous hazardous environments, such as Zone 1 or Zone 0, the Ethernet system and its associated devices (e.g. ports, etc.) must be protected to ensure that any sparks that may be generated when live-working takes place are below the levels recognised as causing ignition in relevant safety standards. Thus, in practice, such systems and devices must be certified as being Intrinsically Safe.

A usual technique for rendering systems/devices intrinsically Safe so that the electrical energy used/generated does not exceed predetermined energy levels deemed sufficient to produce a spark and to permit live working, is to incorporate energy-limiting barrier-type circuits based on series resistance and voltage-clamping Zener diodes into the system/device. However, such circuits can distort a signal transmitted via the Ethernet system which has a detrimental effect on the signal quality over the system and so are unsuitable due both to the relatively high series resistance required and the capacitance of the Zener diodes causing a loading impedance effect on the high frequency Ethernet signals.

UK Patent No. GB 2 406 726 discloses a safety device for use with a communication bus and proposed to overcome the disadvantages described above. The device is arranged to monitor the communication system and, upon detection of a fault or cable disconnection, to isolate the hazardous signals before they can cause an incendive spark that may cause and ignition of gases or dusts.

However, this system relies on the cable being disconnected 'cleanly'. A cable damaged in a particular way could still result in an incendive spark being produced that would render the system unsafe.

US Patent No. 6,473,608 discloses a local area network including a hub, a plurality of nodes, communication cabling connecting the plurality of nodes to the hub for providing data communication, and a power supply distributor operative to provide at least some operating power to at least some of the plurality of nodes via the communication cabling.

US 2005/243483 discloses a magnetic interface circuit for interfacing between a line side and a circuit side of a communication channel. The circuit includes a transformer having a primary winding connected to the line side of the channel and a secondary winding connected to the circuit side of the channel. The transformer design includes parasitic L, C and R and, saturation during the surge event, acting to suppress coupling of the electrical surge to the secondary winding. A voltage limiting device is connected in the circuit side of the channel to limit any voltage surges on the circuit side to a safe level.

The present invention seeks to provide for a communication system for hazardous environments having advantages over known such systems.

According to an aspect of the present invention, there is provided an Ethernet communication system safety device for location in a hazardous environment and configured for location in a communication link between an Intrinsically Safe circuit and another Intrinsically Safe circuit, the Ethernet communication system safety device comprising first input means arranged for receiving data signals; first output means arranged to transmit data signals; and an energy limiting means comprising two series coupled capacitors arranged to block a DC component of data signals received in said safety device whilst allowing a remaining component of said data signals to pass for onward transmission.

An advantage of the present invention is that, by limiting the energy of the data signals transmitted to below a pre-determined (i.e. Intrinsically Safe) level, the system can still be operated under live-working conditions, since the energy of the data signals is insufficient to produce a spark. Further, the capacitors block the higher power DC component but allow the small high frequency component of the data signal to pass because they offer only a low impedance path to the data signal. Thus, the potential energy level of the signal under normal and fault conditions is greatly reduced because the DC component is removed, but the small data signal carried by the high frequency component of the signal is unaffected. This makes for an easier assessment against Intrinsic Safety.

Generally the energy limiting means will comprise at least two capacitors.

Preferably the device further comprises a second output means arranged for transmitting data signals and a second input means arranged for receiving signals, and wherein said second output means is coupled to a first end of said energy limiting means and said second input means is coupled to said second end of said energy limiting means.

In particular, said device further comprises a filter module coupled between said first input means and said first end of said energy limiting means.

Also, said device further comprises a filter module coupled between said first input means and said first end of said energy limiting means and also between said second output means and said first end of said energy limiting means.

Conveniently, said filter module is arranged to provide at least one of impedance matching, signal shaping and conditioning, high-voltage isolation, and common-mode noise reduction.

Further, said filter module comprises a magnetic element.

If required, said magnetic element comprises a transformer module.

In particular, said transformer module is configured in a common-mode configuration and incorporates common-mode rejection filter chokes (CMF).

Also, said second input means is arranged for coupling to a first transmission path of a communication bus and said first output means is arranged for coupling to a second transmission path of said communication bus.

Advantageously, said safety device further comprises power input terminals for receiving a power supply and where said power input terminals are coupled to power output terminals arranged for connection to a communication bus.

Preferably, said power output terminals comprise two terminals, with a first of said power output terminals arranged for connection to a third transmission path of said communication bus and a second of said power output terminals arranged for connection to a fourth transmission path of said communication bus.

Conveniently, said device is configured such that, when connected to said communication bus, said third and fourth transmission paths are coupled to a ground terminal of said safety device via a resistor and capacitor in series.

If required, said safety device is arranged to supply power through said communication bus.

In particular, said system is arranged to supply power at a voltage of 12V.

Also, said device is arranged to transmit/receive signals differentially.

Advantageously, said device is compatible with an RJ45 Ethernet connector.

According to another aspect of the present invention, there is provided a communication system for use in a hazardous environment comprising: at least two apparatus arranged to transmit and receive data signals; a communication bus arranged to communicate data signals between said at least two apparatus; and at least two safety devices as described above, each coupled to a corresponding one of said at least two apparatus and further coupled to said communication bus.

Preferably, said communication bus comprises first, second, third and fourth transmission paths, and said first, second, third and fourth transmission paths comprise twisted pair cable.

Conveniently, said data signals are communicated differentially.

Further, said communication bus comprises one of an unshielded cable or a shielded cable.

The present invention is described further hereinafter, by way of example only, with reference to the accompanying drawings in which:
Fig. 1 illustrates a schematic block diagram of a communication system for communicating data between non-intrinsically safe devices located in a non-hazardous area, between intrinsically safe apparatus located in a hazardous area, and between non-intrinsically safe devices located in a non-hazardous area and intrinsically safe apparatus located in a hazardous area;
Fig. 2 illustrates a schematic diagram of a communication bus for communicating between intrinsically safe apparatus of Fig. 1; and
Fig. 3 illustrates a communication port for connection between said intrinsically safe apparatus and said communication bus.

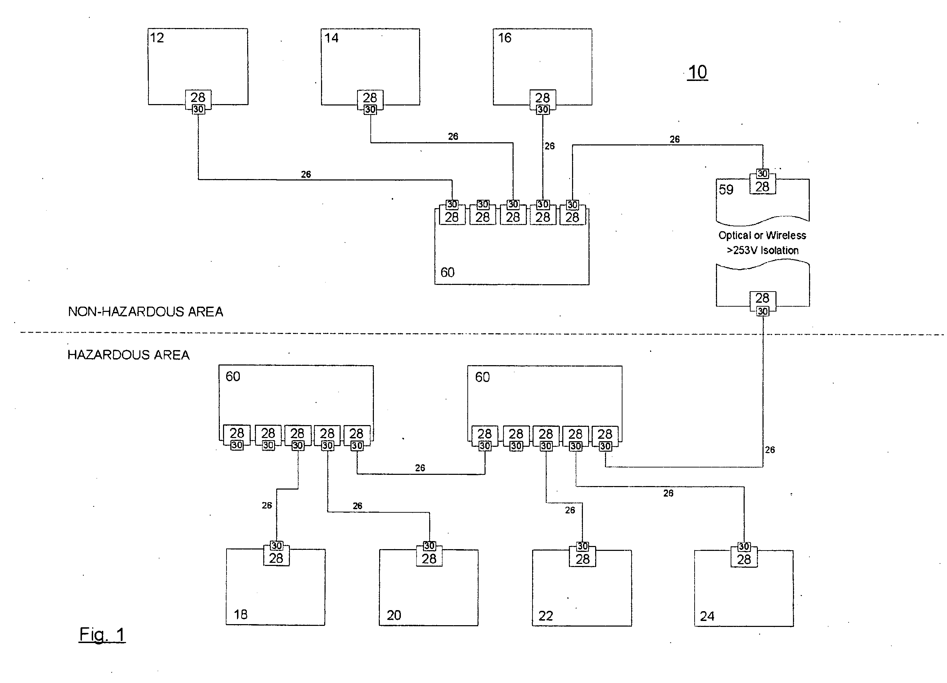

As mentioned, Fig. 1 illustrates a communication system 10 which includes a plurality of (Non-Intrinsically Safe) devices 12, 14, 16 (for example, a personal computer, server, HMI Interface, etc.) and a plurality of Intrinsically Safe (I.S.) apparatus 18, 20, 22, 24 (for example, Remote I/O, Process Controller, etc.). Each of the plurality of devices 12, 14, 16 and the plurality of I.S. apparatus 18, 20, 22, 24 are communicatively coupled to each other by way of communication buses 26. The apparatus and devices are typically interconnected at a switching hub 60, which manages crossing over of transmit and receive pairs as required. In the present embodiment, the function of the plurality of devices 12, 14, 16 and the plurality of I.S. apparatus 18, 20, 22, 24 is unimportant. However, for illustrative purposes, the plurality of I.S. apparatus 18, 20, 22, 24 may perform detection, actuation, etc. and the plurality of devices 12, 14, 16 may be arranged to control, monitor, etc. the plurality of I.S. apparatus 18, 20, 22, 24.

A communication port 28 is coupled to each of the plurality of devices 12, 14, 16 and to each of the plurality of I.S. apparatus 18, 20, 22, 24. Further, a connector 30 is provided at each end of the communication bus 26 and each connector 30 is arranged to cooperate with a corresponding communication port 28 coupled to the plurality of devices 12, 14, 16, the plurality of I.S. apparatus 18, 20, 22, 24 and the plurality of switching hubs 60.

As can be seen in Fig. 1, the plurality of devices 12, 14, 16 are located in a Non-Hazardous environment, but the plurality of I.S. apparatus 18, 20, 22, 24 are located in a hazardous environment. The connection between them can be made with an optically isolated or wireless (RF) interface 59 to provide the necessary >253V isolation barrier between Non-Hazardous and Hazardous Area equipment.

In the present embodiment, the communication bus 26 is Ethernet based, but may be any suitable local area network (LAN) or wide area network (WAN). In particular, the Ethernet physical medium is a 10/100 base T network (as defined in The Institute of Electrical and Electronics Engineers (IEEE) standard 802.3). However, the Ethernet network may also be a 1000 base T network or other network with similar physical properties.

The physical layer for a 10/100 base T network is a cable employing twisted copper pairs. A standard cable has eight separate wires grouped as four twisted pairs, with one pair being for data transmission (TX) and another pair being for data receiving (RX). The remaining two pairs may be unused and are usually terminated at each end in the communication port but, in a particular arrangement, may be used to supply power to equipment in accordance with the IEEE 802.3af "Power over Ethernet" (PoE) standard. This PoE arrangement will be described in more detail later.

The arrangement of one pair of wires being for data transmission and another pair being for data receiving allows for full-duplex data transmission over the Ethernet cable.

The cable may comprise either an unshielded twisted pair, or a shielded variant for use where the likelihood of noise interference is high. Of course, any other suitable medium may be used as said cable.

The use of twisted pair cable is particularly convenient as it allows the communication system 10 to transmit and receive data differentially. Differential signalling is advantageous as it offers increased immunity to noise and crosstalk.

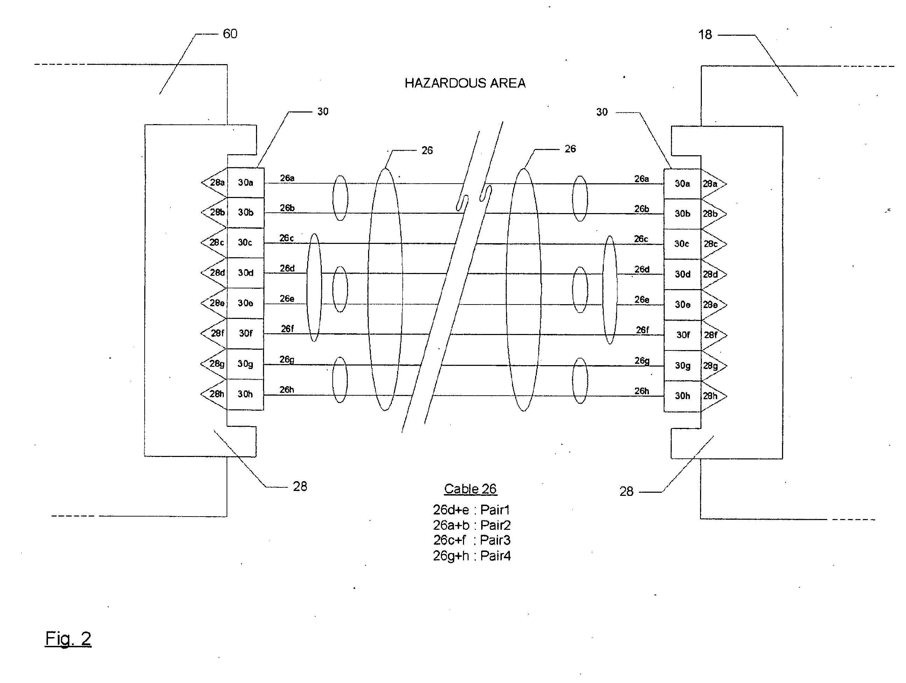

Fig. 2 illustrates in more detail the switching hub 60, the I.S. apparatus 18 (both located in a hazardous environment) and the communication bus 26 therebetween.

The communication port 28 of the switching hub 60 and the communication port 28 of the I.S. apparatus 18 each comprise eight individual communication ports 28a-28h which are arranged to communicatively couple with corresponding individual connectors 30a-30h of connectors 30 located at opposite ends of the communication bus 26. As described above, the communication bus 26 comprises an eight-wire cable. In the present case each individual cable 26a-26h of the communication bus 26 is provided at either end thereof with a corresponding individual connector 30a-30h, e.g. individual cable 26a has a corresponding individual connector 30a at each end thereof, individual cable 26b has a corresponding individual connector 30b at each end thereof, etc.

In the present embodiment, communication ports 28 and connectors 30 are RJ-45 Ethernet compatible, but any suitable connector interface may be used as an alternative,

It should be noted that in the present embodiment, individual connectors 30a-30h are male-type connectors and individual communication ports 28a-28h are female-type. Of course, in alternative arrangements the individual connectors 30a-30h may be female-type connectors and individual communication ports 28a-28h may be of the male-type.

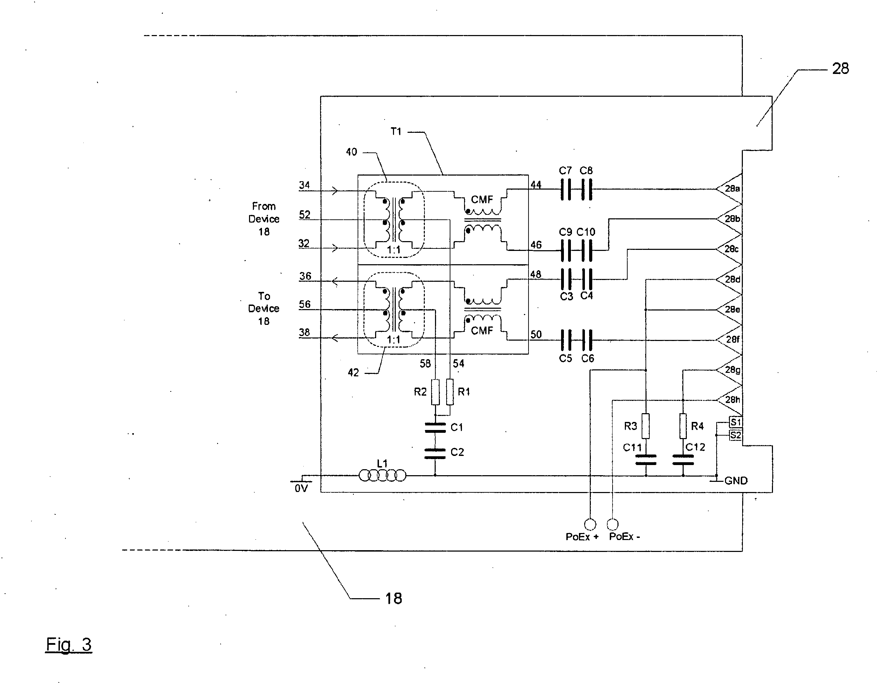

Fig. 3 illustrates a semi-schematic diagram of the communication port 28 of Intrinsically Safe apparatus 18.

As illustrated, the communication port 28 is provided with input means 32, 34 for receiving a differential data signal from I.S. apparatus 18. The communication port 28 is also provided with output means 36, 38 for communicating a differential data signal (received by the communication port 28 via the communication bus (not shown)) to I.S. apparatus 18.

Input means 32, 34 and output means 36, 38 are coupled to a transformer module T1 which comprises a first transformer 40 (illustrated within dotted line) and a second transformer 42 (illustrated within dotted line). In particular, input means 32, 34 are coupled to the first transformer 40 and the output means 36, 38 are coupled to the second transformer 42.

The first transformer 40 is coupled to transmission signal lines 44, 46 and the second transformer 42 is coupled to reception signal lines 48, 50.

In the present embodiment, the transformer module T1 is configured in a common-mode arrangement. Thus, the first transformer 40 is provided with first and second common-mode (CM) terminals 52, 54, where first CM terminal 52 is coupled to I.S. apparatus 18, and second CM terminal is coupled to a ground terminal GND via terminating resistor R1 coupled in series with capacitors C1, C2 (typically 1 nF). Similarly, second transformer 42 is provided with third and fourth CM terminals 56, 58, where third CM terminal 56 is coupled to I.S. apparatus 18, and second CM terminal is coupled to said ground terminal GND via terminating resistor R2 coupled in series with capacitors C1, C2.

As illustrated in Fig. 3, the ground terminal GND is coupled via series inductance L1 to the apparatus supply common terminal having a voltage of 0V. Inductor L1 is, however, an optional feature which may not be required in other arrangements.

Transmission signal line 44 is coupled to individual communication port 28a via series "blocking" capacitors C7, C8, whilst transmission signal line 46 is coupled to individual communication port 28b via series "blocking" capacitors C9, C10.

Receiver signal line 48 is coupled to individual communication port 28c via series "blocking" capacitors C3, C4, whilst receiver signal line 50 is coupled to individual communication port 28f via series "blocking" capacitors C5, C6. However, in an alternative arrangement, connections to individual communication port 28a may optionally be transposed with that of individual communication port 28c and those of individual communication port 28b with individual communication port 28f where a 'cross-over' connection is required.

The "blocking" capacitors C3-C10 typically have values of 100nF. These "blocking" capacitors C3-C10 serve to block certain parameters (e.g. a DC component), but allow the small high frequency Ethernet signals to pass through unimpeded as these, being around 10MHz to 30MHz, are presented only a low impedance path (less than 1 Ω) by the "blocking" capacitors C3-C10.

"Blocking" capacitors C3-C10 still allow the 10/100 base T Ethernet network to operate correctly at both 10Mbps and 100Mbps, but also render the communication port 28 Intrinsically Safe, since by allowing only the small high frequency Ethernet signal to pass, only a very small amount of energy can pass along the communication bus through the aforementioned hazardous environment. Thus, "blocking" capacitors C3-C10 effectively isolate the individual communication ports 28a, 28b, 28c, 28f from the transformer module T1 and the rest of the I.S. apparatus circuitry.

The "blocking" capacitors C1-C10 and C11-C12 are typically 1000VDC rated MLC chip or equivalent high reliability solid dielectric (e.g. ceramic) capacitors.

Also illustrated in Fig. 3 are shield terminals S1, S2 which are coupled to said ground terminal GND of the communication port 28. These shield terminals S1, S2 are arranged to couple with shielding portions of a shielded type communication bus and serve to "ground" the shielding portions to prevent external interference from affecting data signals transmitted via the communication bus.

As mentioned previously, two pairs of the four twisted pair cables of the communication bus are used for transmitting/receiving data, and the other two pairs may be used to supply power under the Power Over Ethernet (PoE) standard.

The present invention also proposes a modification of the PoE standard: the modification, which shall be further referred to as PoEx, where the x signifies its hazardous area association. Standard PoE cannot be used in hazardous areas due to the high levels of voltage and power called for in the IEEE 802.3af standard (i.e. 13 Watts at 48 Volts). Therefore, the present invention proposes a lower voltage of 12V nominal with reduced power levels to meet Intrinsic Safety requirements.

Fig. 3 illustrates PoEx terminals PoEx+, PoEx- arranged to receive the modified 12V Intrinsically Safe power supply from an Ethernet switching hub 60 (Power Sourcing Equipment - PSE). PoEx terminal PoEx+ is coupled to those individual communication ports (28d, 28e) of the communication port 28 which are arranged for connection with one of the unused pairs of the communication bus and the other PoEx terminal PoEx- is coupled to those individual communication ports (28g, 28h) of the communication port 28 which are arranged for connection with the other of the unused pairs of the communication bus. Thus, the modified 12V power supply is distributed via the spare pairs of the communication bus to any device connected thereto (known as powered devices eg: I.S. apparatus18).

Fig. 3 also illustrates that individual communication ports 28d, 28e (first "unused-pair" port) are coupled to one another and, in addition to being coupled to PoEx terminal PoEx+, are also coupled via resistor R3 and capacitor C11, in series, to the ground terminal GND. Similarly, individual communication ports 28g, 28h (second "unused-pair" port) are coupled to one another and, in addition to being coupled to PoEx terminal PoEx-, are also coupled via resistor R4 and capacitor C12, in series, to the ground terminal GND. Such an arrangement terminates the unused pairs without adding any unnecessary DC loading to the 12VDC PoEx supply when connected, effectively "zero power termination".

The above description relates to an embodiment in which a switching hub 60, located in a hazardous environment, is arranged for communication via a communication bus with an I.S. apparatus 18 also located in a hazardous environment. However, in an alternative arrangement, both the switching hub 60 and I.S. apparatus 18 may be located in non-hazardous environments and it is merely the communication bus connecting the two which passes through a hazardous environment. It is clear the present invention is also applicable to such a situation since signals passing through the communication bus in the hazardous environment must be below a certain energy level in order to avoid producing a spark in normal operation and also when in a fault condition.

Additional safety measures can be incorporated into the present invention to further enhance the described system. Such additional measures may comprise "encapsulating" the communication ports 28 and I.S. apparatus 18 in an enclosure which serves to prevent an explosive atmosphere from entering the enclosure. Thus, a spark within the enclosure will not ignite the external explosive atmosphere. This allows higher power levels to exist inside the apparatus than would otherwise be possible allowing for more powerful applications to be realised.

By arranging the apparatus to have its low voltage internal supply rail (typically 5V, 3.3 Volt or lower) clamped at a low level by Zener diodes, Crowbar circuitry or similar, the signal outputs derived from these power rails are also guaranteed to be at a low level (and nominally 1-2V) helping the Intrinsic Safety assessment.

## Claims

1. An Ethernet communication system safety device (28) for location in a hazardous environment and configured for location in a communication link between an Intrinsically Safe circuit and another Intrinsically Safe circuit, the Ethernet communication system safety device comprising first input means (32, 34) arranged for receiving data signals; first output means (28a, 28b) arranged to transmit data signals; and **characterized by** an energy limiting means comprising two series coupled capacitors (C3, C4, C5, C6. C7, C8, C9, C10) arranged to block a DC component of data signals received in said safety device, whilst allowing a remaining component of said data signals to pass for onward transmission.

2. A device (28) according to Claim 1, further comprising a second output means (36, 38) arranged for transmitting data signals and a second input means (28c, 28f) arranged for receiving signals, and wherein said second output means is coupled to said first end of said energy limiting means and said second input means is coupled to said second end of said energy limiting means.

3. A device (28) according to Claim 1, further comprising a filter module (T1) coupled between said first input means (32, 34) and said first end of said energy limiting means.

4. A device (28) according to Claim 2, further comprising a filter module (T1) coupled between said first input means (32, 34) and said first end of said energy limiting means and also between said second output means (36, 38) and said first end of said energy limiting means.

5. A device (28) according to Claim 3 or Claim 4, wherein said filter module (T1) is arranged to provide at least one of impedance matching, signal shaping and conditioning, high-voltage isolation, and common-mode noise reduction.

6. A device (28) according to any one or more of Claims 3 to 5, wherein said filter module (T1) comprises a magnetic element.

7. A device (28) according to Claim 6, wherein said magnetic element comprises a transformer module.

8. A device (28) according to Claim 7, wherein said transformer module is configured in a common-mode configuration and incorporates common-mode rejection filter chokes (R1, R2, C1, C2).

9. A device (28) according to any one or more of Claims 2 to 8, wherein said second input means (28c, 28f) is arranged for coupling to a first transmission path (26c, 26f) of a communication bus (26) and said first output means (28a, 28b) is arranged for coupling to a second transmission path (26a, 26b) of said communication bus.

10. A device (28) according to Claim 9, wherein said safety device further comprises power input terminals (PoEx+, PoEx-) for receiving a power supply and where said power input terminals are coupled to power output terminals (28d, 28e, 28g, 28h) arranged for connection to a communication bus (26).

11. A device (28) according to Claim 10, wherein said power output terminals (28d, 28e, 28g, 28h) comprise two terminals, with a first (28d, 28e) of said power output terminals arranged for connection to a third transmission path (26d, 26e) of said communication bus (26) and a second (28g, 28h) of said power output terminals arranged for connection to a fourth transmission path (26g, 26h) of said communication bus.

12. A device (28) according to Claim 11, wherein said device is configured such that, when connected to said communication bus (26), said third (26d, 26e) and fourth (26g, 26h) transmission paths are coupled to a ground terminal (GND) of said safety device via a terminating resistor (R3, R4) and capacitor (C11, C12) in series.

13. A device (28) according to any one or more of Claims 10 to 12, wherein said safety device is arranged to supply power through said communication bus (26) (PoEx).

14. A device according to Claim 13, wherein said system is arranged to supply power at a voltage of 12V.

15. A device according to any one or more of Claims 2 to 14, wherein said device is arranged to transmit/receive signals differentially.

16. A device according to any one or more of the preceding claims, wherein said device is compatible with an RJ45 Ethernet connector.

17. A communication system (10) for use in a hazardous environment comprising: at least two apparatus (12, 14, 16, 18, 20, 22, 24, 60) arranged to transmit and receive data signals; a communication bus (26) arranged to communicate data signals between said at least two apparatus; and at least two safety devices (28) according to any one or more of the preceding claims, each coupled to a corresponding one of said at least two apparatus and further coupled to said communication bus.

18. A system (10) according to Claim 17, wherein said communication bus (26) comprises first (26c, 26f), second (26a, 26b), third (26d, 26e) and fourth (26g, 26h) transmission paths, and said first, second, third and fourth transmission paths comprises twisted pair cable.

19. A system (10) according to Claim 18, wherein said data signals are communicated differentially.

20. A system (10) according to any one or more of Claims 17 to 19, wherein said communication bus (26) comprises one of an unshielded cable or a shielded cable.

## Patentansprüche

1. Sicherheitsvorrichtung (28) ein Ethernet-Kommunikationssystem für den Einsatz in einer gefährlichen Umgebung, die für den Einsatz in einer Kommunikationsverbindung zwischen einer eigensicheren Schaltung und einer anderen eigensicheren Schaltung konfiguriert ist, wobei die Sicherheitsvorrichtung für das Ethernet-Kommunikationssystem Folgendes umfasst: ein erstes Eingabemittel (32, 34) zum Empfangen von Datensignalen; ein erstes Ausgabemittel (28a, 28b) zum Senden von Datensignalen; und **gekennzeichnet durch** ein Energiebegrenzungsmittel, das zwei in Serie geschaltete Kondensatoren (C3, C4, C5, C6, C7, C8, C9, C10) zum Sperren einer DC-Komponente von Datensignalen umfasst, die in der genannten Sicherheitsvorrichtung empfangen werden, während eine übrige Komponente der genannten Datensignale zur Weiterleitung durchgelassen wird.

2. Vorrichtung (28) nach Anspruch 1, die ferner ein zweites Ausgabemittel (36, 38) zum Senden von Datensignalen und ein zweites Eingabemittel (28c, 28f) zum Empfangen von Signalen umfasst und wobei das genannte zweite Ausgabemittel mit dem genannten ersten Ende des genannten Energiebegrenzungsmittels gekoppelt ist und das genannte zweite Eingabemittel mit dem genannten zweiten Ende des genannten Energiebegrenzungsmittels gekoppelt ist.

3. Vorrichtung (28) nach Anspruch 1, die ferner ein Filtermodul (T1) fasst, das zwischen dem genannten ersten Eingabemittel (32, 34) und dem genannten ersten Ende des genannten Energiebegrenzungsmittels gekoppelt ist.

4. Vorrichtung (28) nach Anspruch 2, die ferner ein Filtermodul (T1) umfasst, das zwischen dem genannten ersten Eingabemittel (32, 34) und dem genannten ersten Ende des genannten Energiebegrenzungsmittels sowie zwischen dem genannten zweiten Ausgabemittel (36, 38) und dem genannten ersten Ende des genannten Energiebegrenzungsmittels gekoppelt ist.

5. Vorrichtung (28) nach Anspruch 3 oder Anspruch 4, wobei das genannte Filtermodul (T1) für Impedanzanpassung, Signalformung und -konditionierung, Hochspannungsisolierung und/oder Gleichtaktrauschreduzierung ausgelegt ist.

6. Vorrichtung (28) nach einem oder mehreren der Ansprüche 3 bis 5, wobei das genannte Filtermodul (T1) ein Magnetelement umfasst.

7. Vorrichtung (28) nach Anspruch 6, wobei das genannte Magnetelement ein Transformatormodul umfasst.

8. Vorrichtung (28) nach Anspruch 7, wobei das genannte Transformatormodul in einer Gleichtaktkonfiguration konfiguriert ist und Gleichtakt-Sperrfilterdrosseln (R1, R2, C1, C2) aufweist.

9. Vorrichtung (28) nach einem oder mehreren der Ansprüche 2 bis 8, wobei das genannte zweite Eingabemittel (28c, 28f) zum Koppeln mit einem ersten Übertragungsweg (26c, 26f) eines Kommunikationsbusses (26) ausgelegt ist und das genannte erste Ausgabemittel (28a, 28b) zum Koppeln mit einem zweiten Übertragungsweg (26a, 26b) des genannten Kommunikationsbusses ausgelegt ist.

10. Vorrichtung (28) nach Anspruch 9, wobei die genannte Sicherheitsvorrichtung ferner Stromeingangsanschlüsse (PoEx+, PoEx-) zum Empfangen einer Stromversorgung umfasst und wobei die genannten Stromeingangsanschlüsse mit Stromausgangsanschlüssen (28d, 28e, 28g, 28h) gekoppelt sind, die für eine Verbindung mit einem Kommunikationsbus (26) ausgelegt sind.

11. Vorrichtung (28) nach Anspruch 10, wobei die genannten Stromausgangsanschlüsse (28d, 28e, 28g, 28h) zwei Anschlüsse umfassen, wobei ein erster (28d, 28e) der genannten Stromausgangsanschlüsse für eine Verbindung mit einem dritten Übertragungsweg (26d, 26e) des genannten Kommunikationsbusses (26) ausgelegt ist und ein zweiter (28g, 28h) der genannten Stromausgangsanschlüsse für eine Verbindung mit einem vierten Übertragungsweg (26g, 26h) des genannten Kommunikationsbusses ausgelegt ist.

12. Vorrichtung (28) nach Anspruch 11, wobei die genannte Vorrichtung so konfiguriert ist, dass bei einer Verbindung mit dem genannten Kommunikationsbus (26) der dritte (26d, 26e) und vierte (26g, 26h) Übertragungsweg mit einem Masseanschluss (GND) der genannten Sicherheitsvorrichtung über einen Abschlusswiderstand (R3, R4) und Kondensator (C 11, C12) in Serie geschaltet sind.

13. Vorrichtung (28) nach einem oder mehreren der Ansprüche 10 bis 12, wobei die genannte Sicherheitsvorrichtung zum Zuführen von Strom durch den genannten Kommunikationsbus (26) (PoEx) ausgelegt ist.

14. Vorrichtung nach Anspruch 13, wobei das genannte System zum Zuführen von Strom mit einer Spannung von 12 V ausgelegt ist.

15. Vorrichtung nach einem oder mehreren der Ansprüche 2 bis 14, wobei die genannte Vorrichtung zum differentiellen Senden/Empfangen von Signalen ausgelegt ist.

16. Vorrichtung nach einem oder mehreren der vorherigen Ansprüche, wobei die genannte Vorrichtung mit einem RJ45 Ethernet-Verbinder kompatibel ist.

17. Kommunikationssystem (10) für den Einsatz in einer gefährlichen Umgebung, das Folgendes umfasst: wenigstens zwei Einrichtungen (12, 14, 16, 18, 20, 22, 24, 60) zum Senden und Empfangen von Datensignalen; einen Kommunikationsbus (26) zum Übertragen von Datensignalen zwischen den genannten wenigstens zwei Einrichtungen; und wenigstens zwei Sicherheitsvorrichtungen (28) nach einem oder mehreren der vorherigen Ansprüche, die jeweils mit einer entsprechenden einen der genannten wenigstens zwei Einrichtungen und ferner mit dem genannten Kommunikationsbus gekoppelt sind.

18. System (10) nach Anspruch 17, wobei der genannte Kommunikationsbus (26) einen ersten (26c, 26f), zweiten (26a, 26b), dritten (26d, 26e) und vierten (26g, 26h) Übertragungsweg umfasst und wobei der genannte erste, zweite, dritte und vierte Übertragungsweg Zweidrahtleitungen (twisted pair) umfassen.

19. System (10) nach Anspruch 18, wobei die genannten Datensignale differentiell übertragen werden.

20. System (10) nach einem oder mehreren der Ansprüche 17 bis 19, wobei der genannte Kommunikationsbus (26) ein ungeschirmtes Kabel oder ein geschirmtes Kabel umfasst.

## Revendications

1. Un dispositif de sécurité (28) de système de communication Ethernet pour une installation dans un environnement dangereux et configuré pour une installation dans une liaison de communication entre un circuit à sécurité intrinsèque et un autre circuit à sécurité intrinsèque, le dispositif de sécurité de système de communication Ethernet comprenant un premier moyen d'entrée (32, 34) agencé de façon à recevoir des signaux de données, un premier moyen de sortie (28a, 28b) agencé de façon à transmettre des signaux de données, et **caractérisé par** un moyen de limitation d'énergie comprenant deux condensateurs couplés en série (C3, C4, C5, C6, C7, C8, C9, C10) agencés de façon à bloquer une composante continue de signaux de données reçue dans ledit dispositif de sécurité tout en permettant à une composante restante desdits signaux de données de passer pour une transmission vers l'avant.

2. Un dispositif (28) selon la Revendication 1, comprenant en outre un deuxième moyen de sortie (36, 38) agencé de façon à transmettre des signaux de données et un deuxième moyen d'entrée (28c, 28f) agencé de façon à recevoir des signaux, et où ledit deuxième moyen de sortie est couplé à ladite première extrémité dudit moyen de limitation d'énergie et ledit deuxième moyen d'entrée est couplé à ladite deuxième extrémité dudit moyen de limitation d'énergie.

3. Un dispositif (28) selon la Revendication 1, comprenant en outre un module de filtre (T1) couplé entre ledit premier moyen d'entrée (32, 34) et ladite première extrémité dudit moyen de limitation d'énergie.

4. Un dispositif (28) selon la Revendication 2, comprenant en outre un module de filtre (T1) couplé entre ledit premier moyen d'entrée (32, 34) et ladite première extrémité dudit moyen de limitation d'énergie et également entre ledit deuxième moyen de sortie (36, 38) et ladite première extrémité dudit moyen de limitation d'énergie.

5. Un dispositif (28) selon la Revendication 3 ou 4, où ledit module de filtre (T1) est agencé de façon à fournir au moins un parmi une adaptation d'impédance, un prétraitement et une mise en forme de signal, une isolation haute tension, et une réduction de bruit de mode commun.

6. Un dispositif (28) selon l'une quelconque ou plusieurs des Revendications 3 à 5, où ledit module de filtre (T1) comprend un élément magnétique.

7. Un dispositif (28) selon la Revendication 6, où ledit élément magnétique comprend un module de transformateur.

8. Un dispositif (28) selon la Revendication 7, où ledit module de transformateur est configuré selon une configuration de mode commun et est muni de bobines de filtrage de rejet de mode commun (R1, R2, C1, C2).

9. Un dispositif (28) selon l'une quelconque ou plusieurs des Revendications 2 à 8, où ledit deuxième moyen d'entrée (28c, 28f) est agencé de façon à se coupler à un premier chemin de transmission (26c, 26f) d'un bus de communication (26) et ledit premier moyen de sortie (28a, 28b) est agencé de façon à se coupler à un deuxième chemin de transmission (26a, 26b) dudit bus de communication.

10. Un dispositif (28) selon la Revendication 9, où ledit dispositif de sécurité comprend en outre des bornes d'entrée d'alimentation électrique (PoEx+, PoEx-) destinées à recevoir une alimentation électrique et où lesdites bornes d'entrée d'alimentation électrique sont couplées à des bornes de sortie d'alimentation électrique (28d, 28e, 28g, 28h) agencées pour une connexion à un bus de communication (26).

11. Un dispositif (28) selon la Revendication 10, où lesdites bornes de sortie d'alimentation électrique (28d, 28e, 28g, 28h) comprennent deux bornes, avec une première borne (28d, 28e) desdites bornes de sortie d'alimentation électrique agencée pour une connexion à un troisième chemin de transmission (26d, 26e) dudit bus de communication (26) et une deuxième borne (28g, 28h) desdites bornes de sortie d'alimentation électrique agencée pour une connexion à un quatrième chemin de transmission (26g, 26h) dudit bus de communication.

12. Un dispositif (28) selon la Revendication 11, où ledit dispositif est configuré de sorte que, lorsqu'il est connecté audit bus de communication (26), lesdits troisième (26d, 26e) et quatrième (26g, 26h) chemins de transmission sont couplés à une borne de mise à la terre (GND) dudit dispositif de sécurité par l'intermédiaire d'une résistance d'extrémité (R3, R4) et d'un condensateur (C11, C12) en série.

13. Un dispositif (28) selon l'une quelconque ou plusieurs des Revendications 10 à 12, où ledit dispositif de sécurité est agencé de façon à fournir une alimentation électrique par ledit bus de communication (26) (PoEx).

14. Un dispositif selon la Revendication 13, où ledit système est agencé de façon à fournir une alimentation électrique à une tension de 12V.

15. Un dispositif selon l'une quelconque ou plusieurs des Revendications 2 à 14, où ledit dispositif est agencé de façon à transmettre/recevoir des signaux de manière différentielle.

16. Un dispositif selon l'une quelconque ou plusieurs des Revendications précédentes, où ledit dispositif est compatible avec un connecteur Ethernet RJ45.

17. Un système de communication (10) pour une utilisation dans un environnement dangereux comprenant: au moins deux appareils (12, 14, 16, 18, 20, 22, 24, 60) agencés de façon à transmettre et recevoir des signaux de données, un bus de communication (26) agencé de façon à communiquer des signaux de données entre lesdits au moins deux appareils, et au moins deux dispositifs de sécurité (28) selon l'une quelconque ou plusieurs des Revendications précédentes, chacun d'eux couplé à un appareil correspondant desdits au moins deux appareils et couplé en outre audit bus de communication.

18. Un système (10) selon la Revendication 17, où ledit bus de communication (26) comprend un premier (26c, 26f), un deuxième (26a, 26b), un troisième (26d, 26e) et un quatrième (26g, 26h) chemins de transmission, et lesdits premier, deuxième, troisième et quatrième chemins de transmission comprennent un câble à paire torsadée.

19. Un système (10) selon la Revendication 18, où lesdits signaux de données sont communiqués de manière différentielle.

20. Un système (10) selon l'une quelconque ou plusieurs des Revendications 17 à 19, où ledit bus de communication (26) comprend un élément parmi un câble non blindé ou un câble blindé.
